# EUROPEAN PATENT SPECIFICATION

(11) **EP 3 674 041 B1**
(45) Date of publication and mention of the grant of the patent: **16.03.2022**
(21) Application number: 19762278.0
(22) Date of filing: 29.01.2019
(51) Int. Cl.: B25J 15/06, B65G 47/91, B25J 5/02, B25J 9/00, B25J 9/10

(54) **TRACKING-TYPE BLISTER PACK TRANSFERRING MANIPULATOR**
VERFOLGENDER ROBOTERMANIPULATOR ZUR ÜBERTRAGUNG VON BLISTERPLATTEN
MANIPULATEUR DE TRANSFERT D'EMBALLAGE-COQUE DE TYPE À SUIVI

(30) Priority: 08.11.2018 CN 201811323067
(43) Date of publication of application: 01.07.2020
(73) Proprietor: ZHEJIANG HOPING MACHINERY CO., LTD., Technology Industrial Zone Wenzhou Zhejiang 325200 (CN)
(72) Inventor: LI, Wenlei, Wenzhou Zhejiang 325200 (CN); YANG, Yifu, Wenzhou Zhejiang 325200 (CN); LI, Junjie, Wenzhou Zhejiang 325200 (CN)
(74) Representative: Petculescu, Ana-Maria
(86) International application number: PCT/CN2019/073586
(87) International publication number: WO 2020/093610

(56) References cited:
- CN-A- 104 554 935
- CN-A- 106 737 601
- CN-A- 108 748 108
- CN-A- 109 159 145
- CN-U- 202 115 728
- CN-Y- 2 863 650
- DE-A1-102005 061 833
- FR-A1- 2 641 223
- JP-A- H0 891 579
- JP-A- S60 221 230
- SU-A1- 1 018 666

## Description

### Technical Field

The present disclosure relates to a robotic manipulator, specifically to a tracking robotic manipulator for transferring a blister board which establishes a conveying connection between a blister machine and a boxing machine.

### Background

The blister packaging machine generally consists of a blister machine and a boxing machine, wherein the blister machine accomplishes the formation and packaging of a pharmaceutical blister, and the boxing machine accomplishes the boxing of the pharmaceutical blister. A traditional blister machine conveyor belt is generally arranged in parallel with a boxing machine conveyor belt. The pharmaceutical blister is absorbed from the blister machine conveyor belt and discharged onto the boxing machine conveyor belt, through a robotic manipulator for absorbing/discharging board between the blister machine conveyor belt and the boxing machine conveyor belt, so as to realize linkage. At present, all of the existing blister machines employ the tracking robotic manipulator for absorbing/discharging board, as in the previous patent application of the applicant, which is titled as 'Blister Boxing Machine' and whose application number is CN201420196925.3, wherein a robotic manipulator for accomplishing the transferring work includes a mechanical arm, a transverse rod, and a rated number of vacuum nozzles. Although this structure also employs the tracking robotic manipulator for absorbing/discharging board, due to the limitation of the structure itself, the conveyor belts need to move intermittently when the robotic manipulator absorbs/discharges board, so that a conveying efficiency of the blister machine and the boxing machine is limited. Moreover, if the speed is increased, jitters and drifts will occur in the robotic manipulator. EP 1164099 A1 discloses a method for transferring blister packs to a step-less moving feeding line of a packaging machine from an outlet line of a blistering machine by using a three-axes robot means for picking up and discharging the blister packs. The robot means moves in the same direction as the outlet line, so as to follow the movement thereof during the pick-up phase and in the same direction as the feeding line, following the movement thereof, during the discharging phase. The speeds of the outline line and as the feeding line are suitably differentiated for a correct functioning of the transferring system.

Additional documents considered to be relevant include CN 106737601 A (ANSHAN QINGLONG ELECTROMECHANICAL CO LTD) 31May 2017;
FR 2641223 A1 (PEUGEOT [FR]; CITROEN SA [FR]) 6 July 1990;
JP S60221230 A (NISSAN MOTOR) 5 November 1995;
CN 108748108 a (UNIV SHANGHAI JIAN QIA) 6 November 2018; and
JP H0891579 A (NIPPON STEEL CORP) 9 April 1996).

### Summary

In light of the deficiencies of the prior art, the present disclosure provides a tracking robotic manipulator for transferring a blister board, which has a reasonable structure, stably operates, and can keep a blister machine and a boxing machine to quickly, synchronously, and continuously operate.

The tracking robotic manipulator for transferring the blister board is configured according to appended claim 1.

The horizontal keeping component includes a horizontal transverse pull rod, a triangular cantilever, a horizontal vertical pull rod, an upper pull rod support, and a lower pull rod support, the triangular cantilever is hinged at the forth-back transferring arm, a corner of the triangular cantilever is hinged with a rear end of the horizontal transverse pull rod, the upper pull rod support is mounted on the suction nozzle holder, a front end of the horizontal transverse pull rod is hinged with the upper pull rod support, the other corner of the triangular cantilever is hinged with an upper end of the horizontal vertical pull rod, the lower pull rod support is mounted on the slide base, and a lower end of the horizontal vertical pull rod is hinged with the lower pull rod support.

The up-down lifting power source and a triangular connecting arm are connected in a transmission manner, a corner of the triangular connecting arm is hinged with the lower end of the lifting pull rod, and the other corner of the triangular connecting arm is connected to a retractable component which drives the lifting pull rod to pull downward.

The retractable component is a support air cylinder or a pull spring.

Timing belt components are mounted on the machine base, the timing belt component includes a driven timing pulley, a driving timing pulley, and a timing belt, the timing belt is wound around the driven timing pulley and the driving timing pulley, the timing belt is connected to the slide base, and the driving timing pulley and the horizontal transferring power source are connected in a transmission manner.

The suction nozzle holder is provided with three rows of the suction nozzles from front to back.

Any one of the up-down lifting power source, the forth-back transferring power source, and the horizontal transferring power source is a combination of servo motor reducers.

By organically combining the blister machine and the boxing machine by the tracking robotic manipulator for transferring the blister board provided by the present disclosure, not only the yield doubles, but also the stability is more reliable, and an overlaying of multiple boards can be realized.

### Brief Description of the Drawings

FIG. 1 is a diagram showing a working condition of the present disclosure;
FIG. 2 is a perspective diagram of the present disclosure;
FIG. 3 is a front view of the present disclosure; and
FIG. 4 is a side view of the present disclosure.

### Detailed Description of the Embodiments

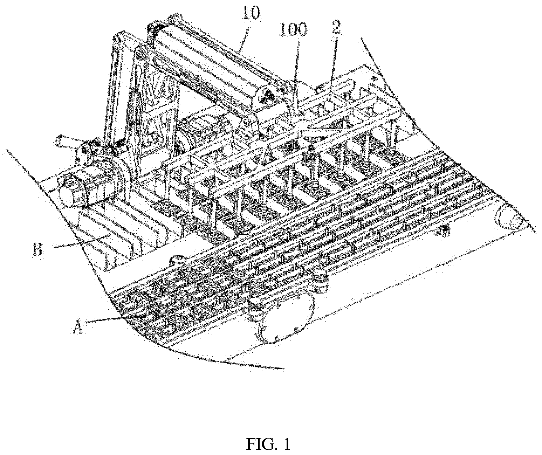

As shown in FIG. 1, the function of a tracking robotic manipulator for transferring a blister board is transferring the blister board in the conveying grid A of a blister machine to the material inlet grid B of a boxing machine, and then putting the blister board and description into a medicine box after a plurality of processes.

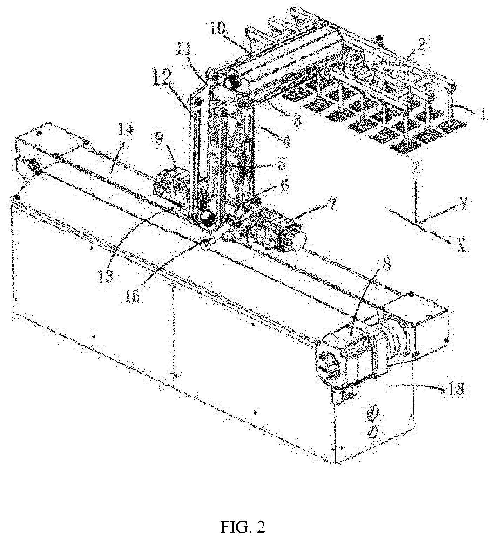

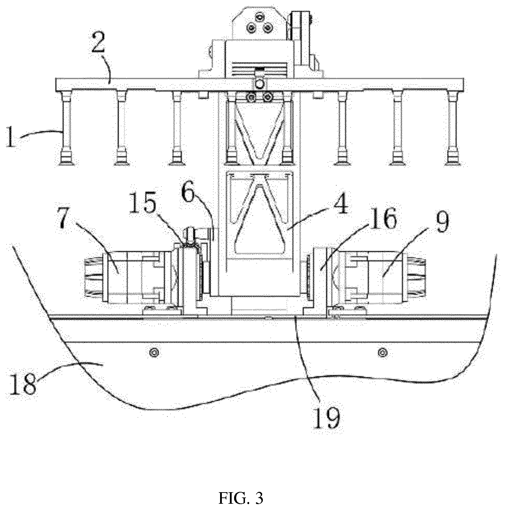

As shown in FIGS. 2-4, the tracking robotic manipulator for transferring a blister board includes the machine base 18, the suction nozzles 1 and the suction nozzle holder 2. The suction nozzles 1 are mounted on the suction nozzle holder 2. These configurations are identical to those of the prior art, and the difference is in the manners to drive the suction nozzle holder 2 to move forward and backward, left and right, and up and down.

To achieve the above-mentioned three moving modes of the suction nozzle holder 2, the suction nozzle holder 2 of the present disclosure is hinged with a connecting shaft at the front end of the up-down lifting arm 3 through the upper support 20. The up-down lifting arm 3 is hinged at the forth-back transferring arm 4. A lower end of the forth-back transferring arm 4 is rotatably mounted on the slide base 19 (the lower end of the forth-back transferring arm is mounted on the slide base 19 through a main shaft and the main shaft base 16). The up-down lifting power source 7 and the forth-back transferring power source 9 are mounted on the slide base 19. The forth-back transferring power source 9 and the forth-back transferring arm 4 are connected in a transmission manner. The up-down lifting power source 7 and a lower end of the lifting pull rod 5 are connected in a transmission manner. An upper end of the lifting pull rod 5 is hinged with a rear end of the up-down lifting arm 3. A slide rail (the slide rail is not shown in figures) provided from left to right is mounted on the machine base 18. The slide base 19 is provided on the slide rail in a slide manner. The slide base 19 and the horizontal transferring power source 8 which drives the slide base 19 to move on the slide rail are connected in a transmission manner. Besides, the slide base 19 is provided with horizontal keeping components for keeping the suction nozzle holder 2 horizontal.

The working principle of the present disclosure is as follows: the robotic manipulator first absorbs a row or several rows of the blister boards (based on the packaging specification) in the conveying grid A of the blister machine. Then the horizontal transferring power source 8 drives the slide base 19 to move. The slide base 19 carrying the suction nozzle holder 2 and the suction nozzles 1 quickly moves in a conveying direction (i.e., an X-axis direction shown in FIG. 2) of the material inlet grid B. Certainly, the slide base 19 horizontally moves at a speed larger than a conveying speed of the material inlet grid B. In the course of horizontal movement, the front and rear transferring power source 9 drives the forth-back transferring arm 4 to rotate, namely, to rotate backward, so that the suction nozzle holder 2 moves toward the material inlet grid B (i.e., a Y-axis direction shown in FIG. 2). Meanwhile, the forth-back lifting power source 7 drives the lifting pull rod 5 to move upward, so that an end of the up-down lifting arm 3 connected to the lifting pull rod 5 moves upward, and an end of the up-down lifting arm 3 connected to the suction nozzle holder 2 moves downward (i.e., a Z-axis direction shown in FIG. 2). As a result, the suction nozzles 1 reach a position right above the material inlet grid B. Subsequently, the suction nozzles are deflated, and a row of the blister boards fall into the material inlet grid B. Certainly, in the course of discharging the boards, the slide base still tracks the material inlet grid B and keeps a movement speed and a conveying direction identical to the material inlet grid B. Only in this way can the blister board be put in the material inlet grid B stably. While the conveying grid A and the material inlet grid B can realize a continuous conveying, thereby greatly improving a packaging efficiency. If the suction nozzle holder 2 is provided with multiple rows of the suction nozzles, in order to achieve packaging of one board per box, the suction nozzle holder 2 needs to move upward (the Z-axis direction shown in FIG. 2) immediately after discharging one row. Simultaneously, the suction nozzle holder 2 quickly moves in the direction (the X-axis direction shown in FIG. 2) opposite to the conveying direction of the material inlet grid B, and reaches a position above an empty position behind the material inlet grid B. At the same time, the forth-back position of the suction nozzle holder 2 (the Y-axis direction shown in FIG. 2) is adjusted to make another row of the suction nozzles 1 located at the position right above the empty position behind the material inlet grid B, and then the suction nozzle holder moves downward to discharge the other row of the blister boards. Certainly, the stacking and boxing of (2-5) boards per box of the blister boards can be accomplished by using an optimized transferring track and a least action beats through programming. Specifically, the suction nozzle holder 2 of the present disclosure is provided with three rows of the suction nozzles 1 from front to back, which can basically satisfy requirements for stacking and boxing (1-5) boards per box of the blister boards.

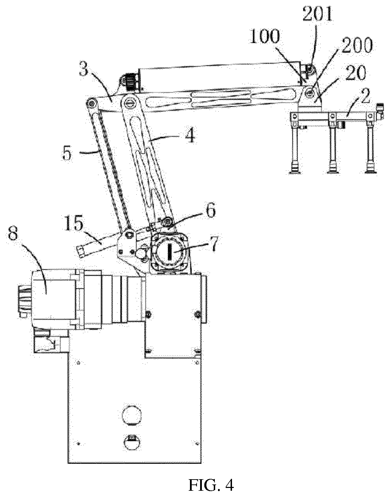

No matter how the suction nozzle holder 2 moves, the suction nozzle holder 2 needs to be horizontal all the time. The suction nozzle holder 2 is kept horizontal through horizontal keeping components. The horizontal keeping component of the present disclosure includes the horizontal transverse pull rod 10, the triangular cantilever 11, the horizontal vertical pull rod 12, the upper pull rod support 100, and the lower pull rod support 13. The triangular cantilever 11 is hinged at the forth-back transferring arm 4. A corner of the triangular cantilever 11 is hinged with a rear end of the horizontal transverse pull rod 10. The upper pull rod support 100 is mounted on the suction nozzle holder 2 (as shown in FIG. 1). A front end of the horizontal transverse pull rod 10 is hinged with the upper pull rod support 100. The other corner of the triangular cantilever 11 is hinged with an upper end of the horizontal vertical pull rod 12. The lower pull rod support 13 is mounted on the slide base 19. A lower end of the horizontal vertical pull rod 12 is hinged with the lower pull rod support 13. By employing the horizontal keeping components, as shown in FIG. 4, the lower hinge point 200 of the suction nozzle holder 2 and the up-down lifting arm 3 is perpendicular to the upper hinge point of the upper pull rod support 100 and the horizontal transverse pull rod 10 all the times (if these two points are not perpendicular to each other, then a direction remains unchanged). Since the lower hinge point 200 and the upper hinge point 201 are both located on the suction nozzle holder 2, the suction nozzle holder 2 will not rotate. No matter whether the suction nozzle holder moves upward and downward, or forward and backward, the suction nozzle holder remains horizontal all the times.

As shown in FIG .4, a connecting section of the up-down lifting arm 3 and the suction nozzle holder 2 is a long arm, while a connecting section of the up-down lifting arm 3 and the lifting pull rod 5 is a short arm. According to the lever principle, the lifting pull rod 5 has to overcome a very large upward tension to make the suction nozzle holder 2 keep balance. The lifting pull rod 5 and the up-down lifting power source 7 are connected in a transmission manner, so the tension to be overcome is transferred to the up-down lifting power source 7, and hence the up-down lifting power source 7 bears a larger load. To reduce the load of the up-down lifting power source 7, in the present disclosure, the up-down lifting power source 7 and the triangular connecting arm 6 are connected in a transmission manner, a corner of the triangular connecting arm 6 is hinged with the lower end of the lifting pull rod 5, and the other corner of the triangular connecting arm 6 is connected to the retractable component 15 which drives the lifting pull rod 5 to pull downward. The retractable component 15 applies a backward tension to a corner of the triangular connecting arm 6, so that a downward tension acts at a connection end of the triangular connecting arm 6 and the lifting pull rod 5, and this downward tension just reduces the upward tension applied by the suction nozzle holder 2 to the lifting pull rod 5. In this way, the load of the up-down lifting power source 7 is reduced, thereby prolonging the service life of the up-down lifting power source 7. Certainly, the retractable component 15 herein may be a pull spring or a support air cylinder.

To enable the slide base 19 to quickly move, timing belt components are mounted on the machine base 18 in the present disclosure. The timing belt component includes a driven timing pulley, a driving timing pulley, and the timing belt 14. The timing belt 14 is wound around the driven timing pulley and the driving timing pulley. The timing belt 14 is connected to the slide base 19, so that the horizontal transferring power source 8 and the driving timing pulley are connected in a transmission manner. By being driven by the horizontal transferring power source 8, the slide base 19 driven by the timing belt 14 can quickly move on the slide rail back and forth, thereby enabling the suction nozzles 1 and the suction nozzle holder 2 to catch up with a conveying speed of the conveying grid A and the material inlet grid B.

In the end, it is worth mentioning that, any one of the up-down lifting power source 7, the forth-back transferring power source 9, and the horizontal transferring power source 8 of the present disclosure is a combination of servo motor reducers. The combination of servo motor reducers can precisely control actions of each mechanism to accomplish absorbing/discharging process of the boards with a minor error.

## Claims

1. A robotic manipulator for transferring a plurality of blister boards from a first conveyance means for conveying the plurality of blister boards to a second conveyance means for conveying a grid configured to receive said plurality of blister boards
wherein the transferring is performed by absorbing a row or several rows of the blister boards from the first conveyance means followed by discharging them in the grid, comprising a machine base (18), suction nozzles (1) configured, during absorbing, to absorb the row or several rows of the blister boards and a suction nozzle holder (2), the suction nozzle holder (2) is hinged at a front end of an up-down lifting arm (3), the up-down lifting arm (3) is hinged at a forth-back transferring arm (4), a lower end of the forth-back transferring arm (4) is rotatably mounted on a slide base (19), an up-down lifting power source (7) and a forth-back transferring power source (9) are mounted on the slide base (19), the forth-back transferring power source (9) and the forth-back transferring arm (4) are connected in a transmission manner, the up-down lifting power source (7) and a lower end of a lifting pull rod (5) are connected in a transmission manner, an upper end of the lifting pull rod (5) is hinged with a rear end of the up-down lifting arm (3), a slide rail provided from left to right is mounted on the machine base (18), the slide base (19) is provided on the slide rail in a slide manner, the slide base (19) and a horizontal transferring power source (8) which drives the slide base (19) to move on the slide rail are connected in a transmission manner, and the slide base (19) is provided with horizontal keeping components for keeping the suction nozzle holder (2) horizontal,
**characterized in that**
the slide base of the robotic manipulator is configured to move during transferring, after the row or the several rows of the blister boards are absorbed, in a conveying direction identical to the second conveyance means, and at a first conveying speed higher than the conveying speed of the second conveying means until the suction nozzles 1 reach a position right above the grid and wherein the slide base of the robotic manipulator is configured to move, after the suction nozzles 1 reached the position right above the grid, in the conveying direction at a second conveying speed identical with the conveying speed of the second conveying means.

2. The robotic manipulator for transferring the blister board according to claim 1, **characterized in that** the horizontal keeping component comprises a horizontal transverse pull rod (10), a triangular cantilever (11), a horizontal vertical pull rod (12), an upper pull rod support (100), and a lower pull rod support (13), the triangular cantilever (11) is hinged at the forth-back transferring arm (4), one corner of the triangular cantilever (11) is hinged with a rear end of the horizontal transverse pull rod (10), the upper pull rod support (100) is mounted on the suction nozzle holder (2), a front end of the horizontal transverse pull rod (10) is hinged with the upper pull rod support (100), another corner of the triangular cantilever (11) is hinged with an upper end of the horizontal vertical pull rod (12), the lower pull rod support (13) is mounted on the slide base (19), and a lower end of the horizontal vertical pull rod (12) is hinged with the lower pull rod support (13).

3. The robotic manipulator for transferring the blister board according to claim 1 or 2, **characterized in that** the up-down lifting power source (7) and a triangular connecting arm (6) are connected in a transmission manner, one corner of the triangular connecting arm (6) is hinged with the lower end of the lifting pull rod (5), and another other corner of the triangular connecting arm (6) is connected to a retractable component (15) which drives the lifting pull rod (5) to pull downward.

4. The robotic manipulator for transferring the blister board according to claim 3, **characterized in that** the retractable component (15) is a support air cylinder or a pull spring.

5. The robotic manipulator for transferring the blister board according to claim 1, **characterized in that** timing belt components are mounted on the machine base, the timing belt component comprises a driven timing pulley, a driving timing pulley, and a timing belt (14), the timing belt (14) is wound around the driven timing pulley and the driving timing pulley, the timing belt (14) is connected to the slide base (19), and the driving timing pulley and the horizontal transferring power source (8) are connected in a transmission manner.

6. The robotic manipulator for transferring the blister board according to claim 1, **characterized in that** the suction nozzle holder (2) is provided with three rows of the suction nozzles (1) from front to back.

7. The robotic manipulator for transferring the blister board according to claim 1, **characterized in that** any one of the up-down lifting power source (7), the forth-back transferring power source (9), and the horizontal transferring power source (8) is a combination of servo motor reducers.

## Patentansprüche

1. Robotermanipulator zum Übertragen einer Vielzahl von Blasenplatten von einer ersten Fördereinrichtung zum Fördern der Vielzahl von Blasenplatten an eine zweite Fördereinrichtung zum Fördern eines Gitters, das zum Aufnehmen der Vielzahl von Blasenplatten ausgebildet ist,
wobei das Übertragen durch Ansaugen einer Reihe oder mehrerer Reihen der Blasenplatten von der ersten Fördereinrichtung, gefolgt von Abgeben derselben im Gitter, erfolgt, umfassend einen Maschinensockel (18), Ansaugdüsen (1), die dazu ausgestaltet sind, während des Ansaugens die Reihe oder Reihen der Blasenplatten anzusaugen, und einen Ansaugdüsenhalter (2), wobei der Ansaugdüsenhalter (2) an einem Vorderende eines Hebearms (3) drehbar angebracht ist, der Hebearm (3) an einem Übertragungsarm (4) drehbar angebracht ist, ein unteres Ende des Übertragungsarms (4) drehbar an einem Gleitsockel (19) befestigt ist, eine Hebekraftquelle (7) und eine Übertragungskraftquelle (9) am Gleitsockel (19) befestigt sind, die Übertragungskraftquelle (9) die Übertragungsarm (4) miteinander in Übertragungsverbindung stehen, die Hebekraftquelle (7) und ein unteres Ende einer Hebezugstange (5) miteinander in Übertragungsverbindung stehen, ein oberes Ende der Hebezugstange (5) drehbar an einem hinteren Ende des Hebearms (3) angebracht ist, eine von links nach rechts verlaufende Gleitschiene am Maschinensockel (18) befestigt ist, der Gleitsockel (19) verschiebbar an der Gleitschiene bereitgestellt ist, die Gleitsockel (19) und eine horizontale Übergabekraftquelle (8), die den Gleitsockel (19) zur Bewegung auf der Gleitschiene antreibt, miteinander in Übertragungsverbindung stehen und der Gleitsockel (19) mit horizontalen Haltekomponenten versehen ist, um den Ansaugdüsenhalter (2) horizontal zu halten,
**dadurch gekennzeichnet, dass**
der Gleitsockel des Robotermanipulators dazu ausgestaltet ist, sich beim Übertragen nach dem Ansaugen der Reihe oder Reihen von Blasenplatten in einer Förderrichtung, die mit der zweiten Fördereinrichtung identisch ist, und mit einer ersten Fördergeschwindigkeit zu bewegen, die höher als die Fördergeschwindigkeit der zweiten Fördereinrichtung ist, bis die Ansaugdüsen (1) eine Position unmittelbar über dem Gitter erreichen, und wobei der Gleitsockel des Robotermanipulators dazu ausgestaltet ist, sich nach dem Erreichen der Position unmittelbar über dem Gitter durch die Ansaugdüsen (1) mit einer zweiten Fördergeschwindigkeit, die mit der Fördergeschwindigkeit der zweiten Förderrichtung identisch ist, in die Förderrichtung zu bewegen.

2. Robotermanipulator zum Übertragen von Blasenplatten nach Anspruch 1, **dadurch gekennzeichnet, dass** die horizontale Haltekomponente eine horizontale Querzugstange (10), einen dreieckigen Ausleger (11), eine horizontale Senkrechtzugstange (12), einen oberen Zugstangenträger (100) und einen unteren Zugstangenträger (13) umfasst, der dreieckige Ausleger (11) am drehbar Übertragungsarm (4) angebracht ist, eine Ecke des dreieckigen Auslegers (11) drehbar an einem hinteren Ende der horizontalen Querzugstange (10) angebracht ist, der obere Zugstangenträger (100) am Ansaugdüsenhalter (2) befestigt ist, ein Vorderende der horizontalen Querzugstange (10) drehbar am oberen Zugstangenträger (100) angebracht ist, eine weitere Ecke des dreieckigen Auslegers (11) drehbar an einem oberen Ende der horizontalen Senkrechtzugstange (12) angebracht ist, der untere Zugstangenträger (13) am Gleitsockel (19) befestigt ist und ein unteres Ende der horizontalen Senkrechtzugstange (12) drehbar am unteren Zugstangenträger (13) angebracht ist.

3. Robotermanipulator zum Übertragen von Blasenplatten nach Anspruch 1 oder 2, **dadurch gekennzeichnet, dass** die Hebekraftquelle (7) und ein dreieckiger Verbindungsarm (6) miteinander in Übertragungsverbindung stehen, eine Ecke des dreieckigen Verbindungsarms (6) drehbar am unteren Ende der Hebezugstange (5) angebracht ist und eine weitere Ecke des dreieckigen Verbindungsarms (6) mit einer einfahrbaren Komponente (15) verbunden ist, die die Hebezugstange (5) nach unten ziehend antreibt.

4. Robotermanipulator zum Übertragen von Blasenplatten nach Anspruch 3, **dadurch gekennzeichnet, dass** die einfahrbare Komponente (15) ein tragender Druckluftzylinder oder eine Zugfeder ist.

5. Robotermanipulator zum Übertragen von Blasenplatten nach Anspruch 1, **dadurch gekennzeichnet, dass** Zahnriemenkomponenten am Maschinensockel befestigt sind, die Zahnriemenkomponenten eine Abtriebsscheibe, eine Antriebsscheibe und einen Zahnriemen (14) umfassen, der Zahnriemen (14) um die Abtriebsscheibe und die Antriebsscheibe gewickelt ist, der Zahnriemen (14) mit dem Gleitsockel (19) verbunden ist und die Antriebsscheibe und die horizontale Übergabekraftquelle (8) miteinander in Übertragungsverbindung stehen.

6. Robotermanipulator zum Übertragen von Blasenplatten nach Anspruch 1, **dadurch gekennzeichnet, dass** der Ansaugdüsenhalter (2) von vorne nach hinten mit drei Reihen von Ansaugdüsen (1) versehen ist.

7. Robotermanipulator zum Übertragen von Blasenplatten nach Anspruch 1, **dadurch gekennzeichnet, dass** eine von der Hebekraftquelle (7), der Übertragungskraftquelle (9) und der horizontalen Übergabekraftquelle (8) eine Kombination von Servomotorreglern ist.

## Revendications

1. Un manipulateur robotique pour transférer une pluralité de plaques blister depuis un premier moyen de transport pour transporter une pluralité de plaques blister à un deuxième moyen de transport pour transporter une grille configurée pour recevoir ladite pluralité de cartes blister
dans lequel le transport est réalisé par l'absorption d'une rangée ou de plusieurs rangées de plaques blister depuis un premier moyen de transport suivie de leur déchargement dans une grille, comprenant une base de machine (18), des buses de succion (1) configurées, durant l'absorption, pour absorber la rangée ou les plusieurs rangées de plaques blister et un support de buse de succion (2), le support de buse de succion (2) est articulé à une extrémité avant d'un bras de levage haut-bas (3), le bras de levage haut-bas (3) est articulé sur un bras de transfert à va-et-vient (4), une extrémité inférieure du bras de transfert à va-et-vient (4) est montée rotativement sur une base coulissante (19), une source d'alimentation électrique de levage haut-bas (7) et une source d'alimentation électrique de transfert à va-et-vient (9) sont montées sur la base coulissante (19), la source d'alimentation électrique de transfert à va-et-vient (9) et le bras de transfert à va-et-vient (4) sont connectés par moyen de transmission, la source d'alimentation électrique de levage haut-bas (7) et une extrémité inférieure d'une barre de traction de levage (5) sont connectées par moyen de transmission, une extrémité supérieure de la barre de traction de levage (5) est articulée sur une extrémité arrière du bras de levage haut-bas (3), une glissière agencée de gauche à droite est montée sur la base de machine (18), la base coulissante (19) est agencée sur la glissière par moyen coulissant, la base coulissante (19) et une source d'alimentation électrique à transfert horizontal (8) entraînant le déplacement de la base coulissante (19) sur la glissière sont connectées par moyen de transmission, et la base coulissante (19) est munie de composants de maintien horizontal afin de maintenir le support de buse de succion (2) horizontal,
**caractérisé en ce que**
la base coulissante du manipulateur robotique est configurée pour se déplacer durant le transfert, une fois que la rangée ou les plusieurs rangées de plaques blister ont été absorbées, dans un sens de transport identique au deuxième moyen de transport, et à une vitesse de transport supérieure à la vitesse de transport du deuxième moyen de transport jusqu'à ce que les buses de succion (1) atteignent la position située au-dessus de la grille, dans le sens de transport identique et selon une vitesse de transport identique à la vitesse de transport du deuxième moyen de transport.

2. Un manipulateur robotique pour transférer une pluralité de plaques blister selon la revendication 1, **caractérisé en ce que** le composant de maintien horizontal comprend une barre de traction transversale (10), un cantilever triangulaire (11), une barre de traction verticale-horizontale (12), un support de barre de traction supérieur (100), et un support de barre de traction inférieur (13), le cantilever triangulaire (11) est articulé sur le bras de transfert à va-et-vient (4), un coin du cantilever triangulaire (11) est articulé à une extrémité arrière de la barre de traction transversale (10), le support de barre de traction supérieur (100) est monté sur le support de buse de succion (2), une extrémité avant de la barre de traction transversale (10) est articulée sur le support de barre de traction supérieur (100), un autre coin du cantilever triangulaire (11) est articulé sur une extrémité supérieure de la barre de traction verticale-horizontale (12), le support de barre de traction inférieur (13) est monté sur la base coulissante (19), et une extrémité inférieure de la barre de traction verticale-horizontale (12) est articulée sur support de barre de traction inférieur (13).

3. Un manipulateur robotique pour transférer une pluralité de plaques blister selon la revendication 1 ou 2, **caractérisé en ce que** la source d'alimentation électrique de levage haut-bas (7) et un bras de connexion triangulaire (6) sont connectés par moyen de transmission, un coin du bras de connexion triangulaire (6) est articulé sur l'extrémité inférieure de la barre de traction de levage (5), et un autre coin du bras de connexion triangulaire (6) est connecté à un composant rétractable (15) qui entraîne la traction de la barre de traction de levage (5) vers le bas.

4. Un manipulateur robotique pour transférer une pluralité de plaques blister selon la revendication 3, **caractérisé en ce que** le composant rétractable (15) est un vérin pneumatique ou un ressort de traction.

5. Un manipulateur robotique pour transférer une pluralité de plaques blister selon la revendication 1, **caractérisé en ce que** des composants de courroie de distribution sont montés sur la base de machine, les composants de courroie de distribution comprennent une poulie de synchronisation entraînée, une poulie de synchronisation d'entraînement et une courroie de distribution (14), la courroie de distribution (14) est enroulée autour de la poulie de synchronisation entraînée et de la poulie de synchronisation d'entraînement, la courroie de distribution (14) est connectée à la base coulissante (19), et la poulie de synchronisation d'entraînement et la source d'alimentation électrique à transfert horizontal (8) sont connectés par moyen de transmission.

6. Un manipulateur robotique pour transférer une pluralité de plaques blister selon la revendication 1, **caractérisé en ce que** le support de buse de succion (2) est muni de trois rangées de buses de succion (1) de l'avant à l'arrière.

7. Un manipulateur robotique pour transférer une pluralité de plaques blister selon la revendication 1, **caractérisé en ce que** la source d'alimentation électrique de levage haut-bas (7), la source d'alimentation électrique de transfert à va-et-vient (9), et la source d'alimentation électrique à transfert horizontal (8) est une combinaison de réducteurs à moteur servo.
